# EUROPEAN PATENT APPLICATION

(11) **EP 3 657 810 A1**
(43) Date of publication of application: **27.05.2020**
(21) Application number: 18382837.5
(22) Date of filing: 21.11.2018
(51) Int. Cl.: H04N 21/422, H04N 21/45, H04N 21/442

(54) **ELECTRONIC DEVICE, METHOD AND SYSTEM FOR INFERRING THE IMPACT OF THE CONTEXT ON USER'S WELLBEING**

(71) Applicant: Telefonica Innovacion Alpha S.L, 28013 Madrid (ES)
(72) Inventor: Matic, Aleksandar, 28013 Madrid (ES); Lantz, Johan, 28013 Madrid (ES)
(74) Representative: Carlos Hernando, Borja

(57) **Abstract**

Electronic device, method and system for inferring the impact of the context on user's wellbeing. The electronic device, comprises a context scanner module (120) to scan a certain area during a given period of time to detect position information of the electronic device (110) of a user (1) including a geographical location of the electronic device (110) and/or the proximity of the electronic device (110) to other electronic devices (110) of other users (2, 3, 4); an emotion feedback module (130) to detect an emotional response of said user (1) during said given period of time by sensing physiological and/or physical signals of the user (1); and a processing unit to establish a relationship between the detected position information and the detected emotional response and to generate a report based on a result of said established relationship, said report providing information about how determined locations and/or users affect user's wellbeing.

## Description

### Technical Field

This invention relates to an electronic device, method and system for inferring the impact of the context on user's wellbeing. More in particular, present invention identifies certain individuals, locations or situations that have an effect (positive or negative) on physical and mental state of a user. The invention can be used to provide recommendations for improving user's wellbeing (e.g. by increasing or decreasing time spent with specific individuals, at specific locations, or in specific situations).

### Background of the Invention

US 20140280529 A1 discloses systems, methods, and devices for determining contexts and determining associated emotion profiles using information received from multiple emotion sensor enabled electronic devices. Contexts can be defined by a description of spatial and/or temporal components. Such contexts can be arbitrarily defined using semantically meaningful and absolute descriptions of times and locations. Emotion sensor data is associated with or includes context data that describes the circumstances under which the data was determined. The emotion sensor data can include emotion sensor readings that are implicit indications of an emotion for the context. The sensor data can also include user reported data with explicit descriptors of an emotion for the context. The emotion sensor data can be filtered by context data according a selected context. The filtered sensor data can then be analyzed to determine an emotion profile for the context that can be output to one or more users or entities. Different to present invention, in this patent application they are labeling context based on people's emotions.

US 20150254563 A1 discloses a method for detecting an emotional stressor in a network which includes detecting changes in emotions of users of the network, correlating individual ones of the changes in emotions, in accordance with a map that illustrates spatial, social, or temporal connections of the users, and inferring a cause of at least one of the changes in emotion, based on the correlating. This patent application focuses on the impact of social networks and on identifying "ill" connections among people and cyber-bulling.

US 7967731 B2 discloses a system and method for motivating users to improve their wellness that utilizes complex event processing on sensor and user-interaction data of the users collected over time using inference and predictive models in order to deliver personalized interactions to motive the users toward their wellness goals.

US 7261690 B2 discloses a detecting, monitoring and reporting apparatus that includes at least two sensors for facilitating the generation of data indicative of physiological parameters of the individual and/or data indicative of contextual parameters of the individual. A processor is coupled to the sensors and is adapted to generate at least one of derived data from at least a portion of the data indicative of physiological parameters and analytical status data from at least a portion of at least one of the data indicative of physiological parameters, the data indicative of contextual parameters, the derived data and the analytical status data. A memory retrievably stores the data and one of various ways of transmitting the data is provided.

US 7914468 B2 discloses a system for detecting non-verbal acoustic energy generated by a subject. The system includes a sensor mountable on or in a body region of the subject, the sensor being capable of sensing the non-verbal acoustic energy; and a processing unit being capable of processing the non-verbal acoustic energy sensed by the sensor and deriving an activity related signature therefrom, thereby enabling identification of a specific activity associated with the non-verbal acoustic energy.

US 7285090 B2 provides an apparatus which includes one or more sensors for collecting data relating to an individual's physiological state and various contextual parameters and a data input and output device for enabling the individual to enter information and for displaying information to the individual. In particular, the apparatus can track caloric consumption and/or caloric expenditure of an individual.

The drivers of individual's emotions and wellbeing are extremely complex both for individuals and for those who wish to understand it, measure it, and/or improve it. Previous research linked wellbeing to physical, social, purpose, belonging, and financial life components. Daily emotional and wellbeing variations can also depend on many factors, internal (such as cognitive processes, thoughts, energy levels, current perception of past/future, and many more) and external (surrounding people, locations, surroundings, weather conditions, etc.).

New technologies are therefore needed for inferring the impact of the context on user's wellbeing.

### Description of the Invention

Present invention aims to isolate the impact of the external factors on individual's wellbeing, and in particular to isolate the impact of the context, and to provide a feedback about the relationship between different contexts and user's wellbeing.

To that end, embodiments of the present invention provide according to a first aspect an electronic device, comprising a context scanner module to scan a certain area during a given period of time to detect position information of the electronic device of a user; an emotion feedback module to detect an emotional response of said user during said given period of time by sensing physiological and/or physical signals of the user; and a processing unit to execute an algorithm that establishes a relationship between the detected position information and the detected emotional response and to further generate a report based on a result of said established relationship, said report providing information about how determined locations and/or users affect user's wellbeing.

According to the present invention, the cited position information may include a geographical location of the electronic device within said certain area and/or the proximity of the electronic device to at least one other electronic device of another user.

The electronic device may comprise a handheld device, a wearable device or a Smartphone, among others.

In an embodiment, the proposed electronic device also includes a communication interface to transmit the generated report to a remote (or separated) computing device, for example to a remote PC, server, etc. Thus, the remote computing device can use the received report to provide recommendations to the user in order to improve user's wellbeing.

Alternatively or complementary, the proposed electronic device may also include a screen or a speaker to expose (i.e. to display or to describe) the generated report, and optionally recommendations, to the user.

In an embodiment, the context scanner module includes two different modules, a first module for detecting said proximity of the electronic device to said at least one other electronic device and a second module for detecting said geographical location of the electronic device. For example, the first module may comprise a Bluetooth sensor, a Wireless sensor, a Zigbee based sensor and/or an audio signal analysis sensor, among others.

In yet another embodiment, the emotion feedback module comprises a plurality of sensors, for instance an electro-dermal activity sensor, a pressure sensor, a temperature sensor, a heart rate detector, a voice/facial analysis sensor, a user-input based sensor, or combinations thereof.

Embodiments of the present invention also provide according to another aspect a method for inferring the impact of the context on user's wellbeing. The method scans, by a context scanner module of an electronic device (e.g. a handheld device, a wearable device or a Smartphone) of a user, a certain area during a given period of time and detects position information of the electronic device based on said scanning. Then, detects, by an emotion feedback module of the electronic device, during said given period of time, an emotional response of said user by sensing physiological and/or physical signals of the user. Finally, a relationship between the detected position information and the detected emotional response is established by a processing unit by executing an algorithm on both said information and emotional response. A report is also generated based on a result of said established relationship, said report providing information about how determined locations and/or users affect user's wellbeing.

In some embodiments, the proposed method also includes the optional step of providing recommendations to the user based on the generated report in order to improve user's wellbeing. By being able to determine how users (people) feel in certain situations present invention will allow targeting recommendations in a more specific way, making them more relevant and accurate for the user(s).

According to the proposed method, the algorithm may comprise a Pearson correlation, a linear regression analysis, a Bayesian statistical analysis and/or any other statistical method for exploring the relationship between variables.

Yet, embodiments of the present invention provide according to another aspect a system including a processing unit and two or more electronic devices such as a handheld device, a wearable device, a Smartphone, etc. each belonging to a different user, and each comprising a context scanner module and an emotion feedback module.

The context scanner module of each electronic device is adapted to scan a certain area during a given period of time to detect position information of the electronic device, said position information including a geographical location of the electronic device within said certain area and/or the proximity of the electronic device to the other electronic devices. On the other hand, the emotion feedback module of each electronic device is adapted to detect an emotional response of a user of the electronic device during said given period of time by sensing physiological and/or physical signals of the user.

The processing unit by executing an algorithm (e.g. a Pearson correlation, a linear regression analysis, a Bayesian statistical analysis and/or any other statistical method for exploring the relationship between variables) can establish a relationship between the detected position information and the detected emotional response and can further generate a report based on a result of said established relationship. The report provides information about how determined locations and/or users affect user's wellbeing.

In an embodiment, the processing unit is included or installed in each one of the electronic devices. Moreover, the electronic devices may optionally include a communication interface to transmit the generated report to a remote or separated computing device (e.g. a PC or a server); so that the computing device can use the received report to provide recommendations to the user of each electronic device in order to improve its wellbeing. Likewise, the electronic devices may also optionally include an electronic interface such as a screen or a speaker to expose the generated report, and optionally recommendations, to the user of each electronic device.

Alternatively, the processing unit is included in a remote or separated computing device (e.g. a PC or a server, among others). In this case each one of the electronic devices further has a communication interface to transmit the detected position information and the detected emotional response to said remote computing device. The latter may use the received report to further provide recommendations to the user of each electronic device in order to improve its wellbeing.

In some embodiments, the context scanner module includes two different modules, a first module for detecting said proximity of the electronic device to the other electronic devices and a second module for detecting said geographical location of the electronic device. Moreover, the emotion feedback module includes a plurality of sensors for example an electro-dermal activity sensor, a pressure sensor, a temperature sensor, a heart rate detector, a voice/facial analysis sensor or a user-input based sensor, among others.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

### Brief Description of the Drawings

The previous and other advantages and features will be more fully understood from the following detailed description of embodiments, with reference to the attached figures, which must be considered in an illustrative and non-limiting manner, in which:
Fig. 1 illustrates an example of the proposed system, according to an embodiment.
Fig. 2 illustrates another example of the proposed system, according to another embodiment.
Fig. 3 is a flow chart illustrating an embodiment of a method for inferring the impact of the context on user's wellbeing
Fig. 4 is a graph showing an example of a Bayesian analysis of the relationship between the user's emotional response and the time duration spent with two different individuals.
Fig. 5 is another graph showing the statistical analysis of the relationship between time spent at one known location (sport-facility) and one unknown location ("location #1").

### Detailed Description of Preferred Embodiments

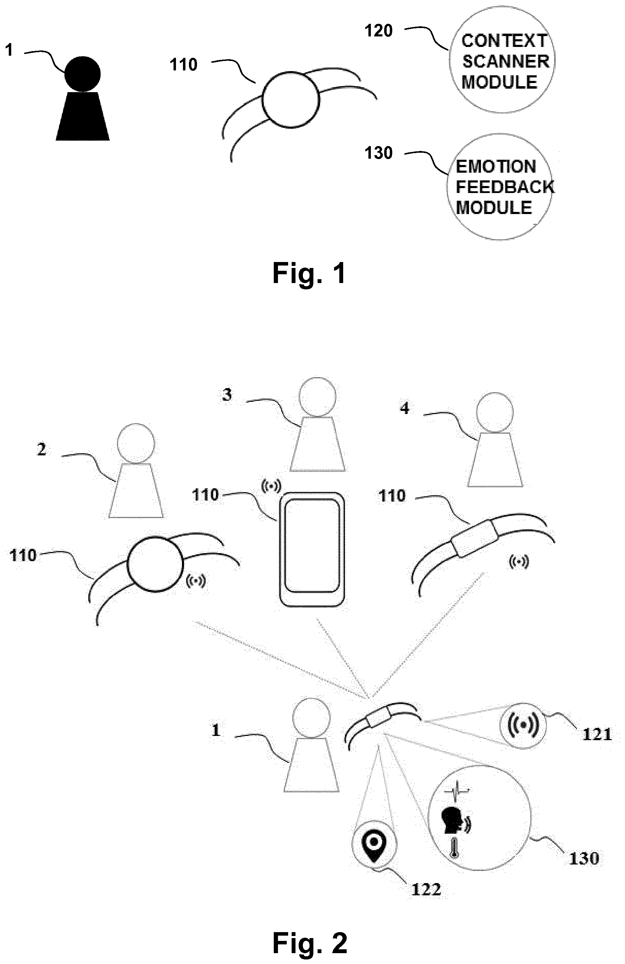

Present invention provides an electronic device 110 (see Fig. 1) of a user 1, such as a smartphone, a handheld or a wearable device, a fitness tracker, an implant or tattoo, etc. that has a context scanner module 120 adapted to scan a certain area during a given period of time to detect position information of the electronic device 110. The position information may at least include a geographical location of the electronic device 110 within said certain area and/or the proximity of the electronic device 110 to other electronic devices 110 of other users 2-4 (see Fig. 2). In addition, the position information may also be based on additional information that may be available about the user 1 and/or on information regarding the surrounding conditions (such as weather, type of the environment, etc.).

In particular, the context scanner module 120 includes two different modules 121, 122. The first module 121 is responsible of actively scanning the surroundings of the electronic device 110 to detect said proximity of the electronic device 110 to the other electronic devices 110, for example this first module can be a Bluetooth sensor, a wireless sensor, a Zigbee based sensor or be based on any radio, audio, video, location, optical based information that can be used to identify immediate proximity of another user, for example an audio signal indicating the presence of human voice in an immediate surrounding (such as by applying MFCC algorithms), an audio signal to detect noise levels, face detection, an audio signal analysis with voice recognition component (this is often delivered in an anonymized form with the voice features extracted to provide authentication but not the raw audio data or the content of the conversation). The second module 122 is responsible of actively scan the location of the electronic device 110 and can be based on GPS, Cell-tower, Wi-Fi, combinations thereof or on an external API for localization such as Google™.

The proposed electronic device 110 also includes an emotion feedback module 130 adapted to detect an emotional response of said user 1 during said given period of time by sensing physiological and/or physical signals of the user 1. That is, this component allows for a regular sampling of signals that can be used to infer emotional response of the user 1, including physiological or physical signals. This can include but is not limited to: Heartrate, PPG (photoplethysmography) or ECG (electrocardiography) signals for the detection of HRV (heartrate variability), EDA (Electro-Dermal Activity), Blood-pressure, Breathing rate, Temperature, Audio and or Video analysis of voice and/or facial cues, among others.

The proposed electronic device 110 also includes a processing unit adapted to execute an algorithm (for example based on a Pearson correlation, a linear regression, a Bayesian statistical analysis, etc.) that by performing a statistical analysis establishes a relationship between the detected position information and the detected emotional response and that also generates a report based on a result of said established relationship. Thus, the report provides information about how determined locations and/or users affect user's wellbeing.

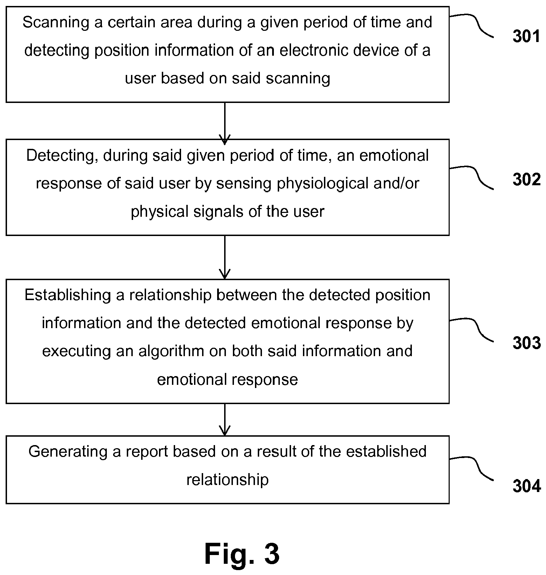

With reference to Fig. 3 therein it is illustrated an embodiment of a method for inferring the impact of the context on user's wellbeing. The method, at step 301, comprises scanning a certain area during a given period of time and detecting position information of an electronic device 110 of a user 1 based on said scanning, where the position information at least includes a geographical location of the electronic device 110 within the given area and/or the proximity of the electronic device 110 to other electronic devices 110 of other users 2-4. The, at step 302, the method comprises detecting, during said given period of time, an emotional response of said user 1 by sensing physiological and/or physical signals of the user 1. At step 303, the method comprises establishing a relationship between the detected position information and the detected emotional response by executing an algorithm on both said information and emotional response. Finally, at step 304, a report is generated based on a result of said established relationship, said report providing information about how determined locations and/or users affect user's wellbeing.

In an embodiment, the proposed method further provides recommendations to the user 1 based on the generated report in order to improve user's wellbeing. For example, "It is a good moment to suggest something motivational and focus on the big picture", "Reflect on positive things", "Time for a quick break", etc.

Following, different contexts where present invention is applicable will be detailed.

### Context 1: Proximity of individuals and the user's wellbeing.-

By continuously collecting information about the surroundings with the context scanner module 120 present invention is able to determine which people (users) are in the vicinity at a certain time. By analyzing the relationship between this information with emotional data collected by the emotion feedback module 130, present invention is able to determine how specific people affects the users' wellbeing, positively or negatively.

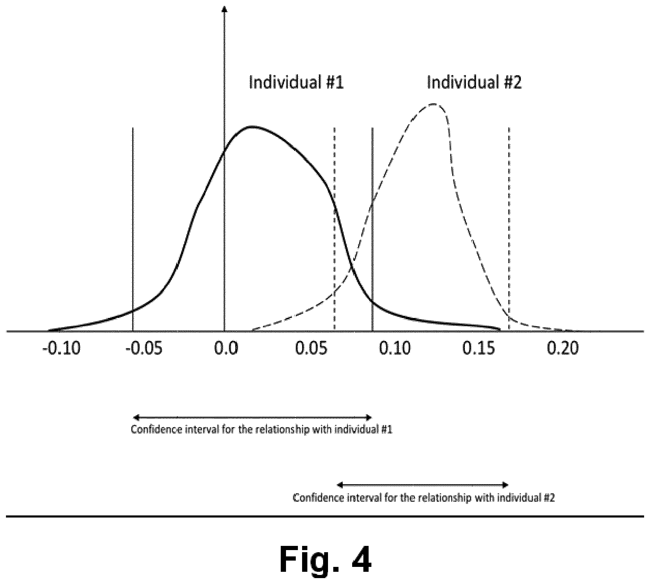

Fig. 4 shows an example of a Bayesian analysis of the relationship between the user's emotional response and the time duration spent with individual#1. Similarly, the other plot refers to the other individual #2. The plot represents the distribution of the impact that the automatically measured variable (time spent with individual#1 and individual #2) has on the other automatically measured variable (wellbeing index) of the user. In this example of applying Bayesian analysis, 95% of distribution density need to lie within the marked region (between vertical lines on Fig.4) - therefore, in case on individual #2 as the density lies fully on a positive side of the impact it can be concluded that time spent with the individual #2 is related to the positive emotional response of the user, whereas no conclusions can be drawn about the individual #1 (i.e. the relationship is not statistically significant). In addition to time spent with a specific individual, the invention can also analyze the number of sessions spent with a specific individual where session refers to an interrupted chunk of time spent with an individual.

For example, in one embodiment, an electronic device 110, e.g. a wearable device, is assigned to a couple (each person/user should wear one wearable device 110) in a romantic relationship or in a friendship, who are interested to assess the emotional impact on each other (or to provide the information to a therapist, marriage consultant, etc.). In a relationship, the system can help by providing a detailed analysis of emotional response of each user in the relationship over time, with time stamps (and if available location data) when the two users were together. For instance, it is possible that certain workday evenings cause conflicts due to built-up stress after work and this tool provides a way to identify these situations and direct therapy or the conversation in the right direction towards the solution. Alternatively, conflicts and friction arise during weekends and vacations since there interaction midweek is limited due to work, hobbies and external commitments. In this case the tool will again be able to shed light on potentially problematic situations and increase the possibility of finding the right solutions, or simply to show that this relationship is dysfunctional.

The invention can also present the analysis or report in a form of a dashboard, graphs and descriptions sent to the email, delivered to a mobile phone, server, and similar.

In another embodiment, the system is based on several electronic devices 110 distributed to the users belonging to one or more teams within a company. In this embodiment, the company is interested in having a detailed insight in the wellbeing of the workforce and in receiving a unique report on how different teams are getting along among each other, or if the atmosphere within a specific team is negatively affecting the wellbeing of its members. In this scenario each employee/user is given an electronic device 110. The electronic devices 110 will have their own unique id but for privacy reasons the results may be delivered to the company in an aggregated form. This way when the users engage with each other, either on the factory floor or in the company meeting rooms' detailed data on current wellbeing can easily be collected, aggregated and presented statistically to detect which working patterns cause positive or negative impact on wellbeing of employees.

### Context 2: Locations and the user's wellbeing.-

In this case, the context is defined only by the location, semantic (such as home, work, gym, bar, university, restaurant, etc.) or by location identifier (loc-id1, iloc-d2, loc-id3 ...). In case of a semantic location, the description can be inferred using know algorithms that e.g. infer "home" or "work" by sampling locations over time and assigning a semantic meaning by assuming the typical habits (home is a location where users spent significant amount of time during nights such as between 2am and 4am, work is one of the top most common locations in the user's distribution of time spent at each location, typically for 4-8h of most of days). The invention can allow users to manually label their locations. In case of the location identifier, the invention samples locations over time while assigning unique identifiers to each uniquely detected location, while also allowing users to manually label locations (e.g. as home, supermarket, shopping center, gym, work, ...).

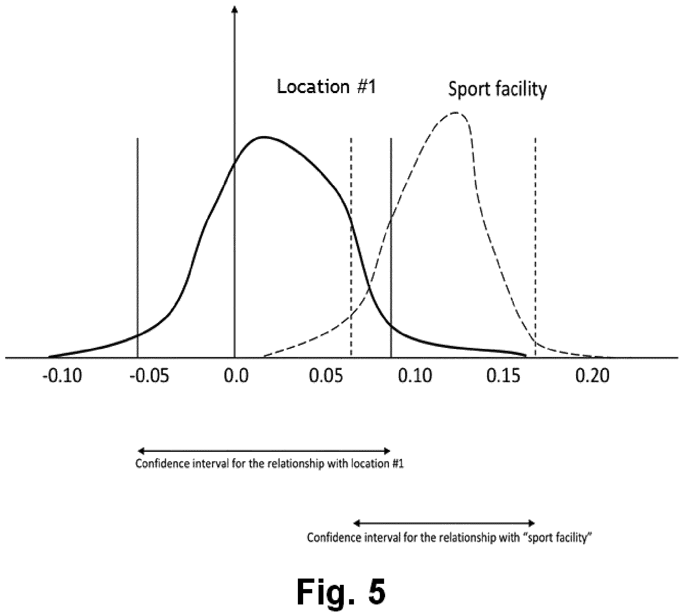

By continuously collecting information about the surroundings the invention is able to determine where a user is currently located (location, google places, surrounding devices). By correlating this information with ongoing emotion related signals the invention identifies locations that over time have an accumulated positive or negative impact on the user. The analysis of this use case is equivalent to Context 1, where the relationship is analyzed with respect to the duration spent at each location (or number of sessions spent at each location, where a session refers to an interrupted chunk of time spent at the location). Similarly to the use case on Fig. 4, Fig. 5 depicts the statistical analysis of the relationship between time spent at one known (sport-facility) and one unknown location ("location #1"), where in the former case there is a statistically significant positive relationship (e.g. the user generally enjoys being at that location) and in the latter case no conclusion can be derived (as there the correlation is not statistically significant).

In the same embodiment, the location does not need to be a fixed one; the transition between two locations can also be automatically or manually labeled (such as commuting).

### Context 3: Situations and the user's wellbeing.-

By combining location and user proximity with the emotional signals recorded by the electronic device 110 the invention can identify situations that affect the user's wellbeing positively or negatively. This context is defined as a vector (timestamp, individual #1, individual #2 ... individual #N, locationID). The vector can be complemented with other contextual information that the invention has the access to, such as weather, or noise. Coupling users in proximity, locations and/or other contextual parameters, enriches the analysis in context 1 or context 2 by providing more insights on the impact of different people, locations, or situations on the user's wellbeing; for instance, meeting a specific colleague (or more) outside of work settings can have a positive impact on the user's emotions versus negative emotions when the same user is in vicinity at work, two married people can have a positive emotional impact on each other when periods at home are frequently interrupted with periods outside of home. The situation can also be defined as noisy environment if e.g. the system has the access to the audio data and extracts the volume in dB.

The invention is adding situations to the dashboard (or other communicational channel) as the said vectors over time as the significant relationships between emotional response and situational vectors are being reached. Overtime, present invention does not provide the details on the analysis as it is equivalent to Context 1 and Context 2.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible.

The scope of the present invention is defined in the following set of claims.

## Claims

1. An electronic device, comprising:
a context scanner module (120) adapted to scan a certain area during a given period of time to detect position information of the electronic device (110) of a user (1), said position information including a geographical location of the electronic device (110) within said certain area and/or the proximity of the electronic device (110) to at least one other electronic device (110) of another user (2, 3, 4);
an emotion feedback module (130) adapted to detect an emotional response of said user (1) during said given period of time by sensing physiological and/or physical signals of the user (1); and
a processing unit adapted to execute an algorithm that establishes a relationship between the detected position information and the detected emotional response and to further generate a report based on a result of said established relationship, said report providing information about how determined locations and/or users affect user's wellbeing.

2. The electronic device of claim 1, further comprising:
a communication interface to transmit the generated report to a remote computing device, such that the computing device can use the received report to provide recommendations to the user (1) in order to improve user's wellbeing; or
an electronic interface including a screen or a speaker to expose the generated report to the user (1).

3. The electronic device of previous claims, wherein the context scanner module (120) includes two different modules (121, 122), a first module (121) for detecting said proximity of the electronic device (110) to said at least one other electronic device (110) and a second module (122) for detecting said geographical location of the electronic device (110).

4. The electronic device of claim 4, wherein the first module (121) comprises a Bluetooth sensor, a Wireless sensor, a Zigbee based sensor and/or an audio signal analysis sensor.

5. The electronic device of previous claims, wherein the emotion feedback module (130) comprises a plurality of sensors including one or more of the following: an electro-dermal activity sensor, a pressure sensor, a temperature sensor, a heart rate detector, a voice/facial analysis sensor or a user-input based sensor.

6. The electronic device of previous claims, wherein the electronic device (110) comprises a handheld device, a wearable device or a Smartphone.

7. A method for inferring the impact of the context on user's wellbeing, the method comprising:
scanning, by a context scanner module (120) of an electronic device (110) of a user (1), a certain area during a given period of time and detecting position information of the electronic device (110) based on said scanning, said position information including a geographical location of the electronic device (110) within the given area and/or the proximity of the electronic device (110) to at least one other electronic device (110) of another user (2, 3, 4);
detecting, by an emotion feedback module (130) of the electronic device (110), during said given period of time, an emotional response of said user (1) by sensing physiological and/or physical signals of the user (1); and
establishing, by a processing unit, a relationship between the detected position information and the detected emotional response by executing an algorithm on both said information and emotional response and further generating a report based on a result of said established relationship, said report providing information about how determined locations and/or users affect user's wellbeing.

8. The method of claim 7, further comprising providing recommendations to the user (1) based on the generated report in order to improve user's wellbeing.

9. The method of claim 7 or 8, wherein said algorithm comprises a Pearson correlation, a linear regression and/or a Bayesian statistical analysis.

10. The method of claims 7 to 9, wherein the electronic device (110) comprise a handheld device, a wearable device or a Smartphone.

11. A system, comprising:
at least two electronic devices (110), each belonging to a different user (1, 2), and each comprising a context scanner module (120) and an emotion feedback module (130),
the context scanner module (120) being adapted to scan a certain area during a given period of time to detect position information of its electronic device (110), said position information including a geographical location of the electronic device (110) within said certain area and/or the proximity of the electronic device (110) to the other electronic device, and
the emotion feedback module (130) being adapted to detect an emotional response of the user (1, 2) of its electronic device (110) during said given period of time by sensing physiological and/or physical signals of the user (1, 2); and
a processing unit adapted to execute an algorithm that establishes a relationship between the detected position information and the detected emotional response and to further generate a report based on a result of said established relationship, said report providing information about how determined locations and/or users affect user's wellbeing.

12. The system of claim 11, wherein the processing unit being included in each one of the at least two electronic devices (110), and wherein the electronic devices (110) further comprise:
a communication interface to transmit the generated report to a remote computing device, such that the computing device can use the received report to provide recommendations to the user (1, 2) of each electronic device (110) in order to improve its wellbeing; or
an electronic interface including a screen or a speaker to expose the generated report to the user (1, 2) of each electronic device (110).

13. The system of claim 11, wherein the processing unit being included in a remote computing device, each one of the at least two electronic devices (110) further comprising a communication interface to transmit the detected position information and the detected emotional response to said remote computing device, the latter using the received report to further provide recommendations to the user (1, 2) of each electronic device (110) in order to improve its wellbeing.

14. The system of claims 7 to 13, wherein:
the context scanner module (120) includes two different modules (121, 122), a first module (121) for detecting said proximity of the electronic device (110) to the other electronic device (110) and a second module (122) for detecting said geographical location of the electronic device (110), wherein the first module (121) comprises a Bluetooth sensor, a Wireless sensor, a Zigbee based sensor and/or an audio signal analysis sensor; and
the emotion feedback module (130) comprises a plurality of sensors including one or more of the following: an electro-dermal activity sensor, a pressure sensor, a temperature sensor, a heart rate detector, a voice/facial analysis sensor or a user-input based sensor.

15. The system of claims 7 to 14, wherein the at least two electronic devices (110) comprises a handheld device, a wearable device or a Smartphone.
